# EUROPEAN PATENT APPLICATION

(11) **EP 2 226 556 A1**
(43) Date of publication of application: **08.09.2010**
(21) Application number: 10250355.4
(22) Date of filing: 26.02.2010
(51) Int. Cl.: F21V 8/00

(54) **Backlight device and video display apparatus using the same**

(30) Priority: 02.03.2009 JP 2009048451
(71) Applicant: Hitachi Consumer Electronics Co., Ltd., Chiyoda-ku Tokyo (JP)
(72) Inventor: Inoue, Hajime, Chiyoda-ku Tokyo 100-8220 (JP); Ouchi, Satoshi, Chiyoda-ku Tokyo 100-8220 (JP); Sakita, Koichi, Chiyoda-ku Tokyo 100-8220 (JP); Murata, Seiji, Chiyoda-ku Tokyo 100-8220 (JP)
(74) Representative: Hackney, Nigel John

(57) **Abstract**

In a backlight device (3) manufactured by simultaneously arranging a plurality of backlight blocks (4) in a combination manner, while each of the backlight blocks (4) is comprised of: a light emitting source containing an LED (7), or a fluorescent lamp; a light conducting plate (5) for conducting light emitted from the light emitting source to the side of a liquid crystal panel (1); and a reflection seat (8) arranged on a rear plane of the light conducting plate (5); a dark luminance portion (12) and a middle dark/bright luminance portion (13) corresponding to dark/bright difference patterns for producing a dark/bright difference in luminance emitted from the backlight blocks (4) are formed; and luminance of a bright luminance portion (11) corresponding to a bright pattern of luminance emitted from a boundary between the backlight blocks (4) is caused not to become visually conspicuous by a luminance fluctuation of the dark/bright difference pattern emitted from the backlight blocks (4).

## Description

### BACKGROUND OF THE INVENTION

### Field of the Invention

The present invention is related to a liquid crystal display-purpose backlight device for performing area dimming with respect to each of blocks defined by dividing an entire area of the backlight device in order to reduce electrical power consumption of the backlight device, and related to a pictures display apparatus using the above-described backlight device.

### Description of the Related Art

In order to properly adopt recent power saving controls, reductions of electric power consumption are required even in liquid crystal display-purpose backlight devices. To this end, area dimming (local dimming) has been popularized in which entire areas of backlight devices are divided into a plurality of backlight blocks, and each of these divided backlight blocks is dimmed. Then, as surface light source apparatuses having large light emitting areas, conventional light source apparatuses in which sub-divided light conducting blocks have been arranged in the tandem form have been disclosed in, for example, JP-A-11-288611. The above-described patent publication discloses the below-mentioned surface light source apparatus. That is, while considering luminance differences occurred between both edges and a center portion of a fluorescent lamp arranged as a primary light source with respect to each of light conducting blocks, in order to avoid an occurrence of a shortage of luminance, which is caused by electrode units of both edges of the primary light source, a notched tongue-shaped superimposed portions is formed at a superimposed portion of adjoining light conducting blocks. Furthermore, the above-described patent publication discloses that the electrode units of both the edges of the primary light source are curved, and the curved electrode units are arranged outside the ranges of the light conducting blocks.

While backlights mounted on large-sized liquid crystal displays are constructed by combining backlight units with each other, which have been divided along longitudinal and lateral directions thereof, in order to avoid that luminance fluctuations occur in joint portions of the respective backlight units, the below-mentioned technical ideas have been disclosed in, for example, JP-A-2004-265635. That is, a transparent acrylic plate is interposed, or a predetermined space is made between the backlight containing a light conducting plate, and both a diffusing plate and a liquid crystal panel.

### SUMMARY OF THE INVENTION

However, in the above-described conventional backlight devices, when either blocks or backlight units are arrayed, there are such problems that light leaks from a boundary of either the blocks or the backlight units due to positional shifts, so that the leaked light constitutes a bright-line, and, conversely speaking, a shortage of light occurs, so that this light constitutes a dark-line. In order to solve the above-described problems, JP-A-11-288611 and JP-A-2004-265635 require to prepare specific structural bodies. That is, as the specific structural bodies, adjoining light conducting blocks must be processed; shapes of light emitting sources are required to be altered; and moreover, a diffusion-purpose acrylic plate must be installed on an upper portion of the light conducting plate. In addition, in the conventional techniques, luminance as to inner portions of blocks is made uniform. As a result, there is another problem that on the contrary, luminance lines of boundaries may become visually conspicuous.

The present invention has an object to provide a backlight device capable of relaxing, or causing luminance differences between boundaries of backlight blocks and inner portions of the backlight blocks not to become visually conspicuous by providing a dark/bright difference pattern of luminance within an inner portion of each of the backlight blocks obtained by dividing an entire area of backlight device, and also to provide a picture display apparatus with employment of the above-described backlight device.

To solve the above-described problems of the conventional techniques, the backlight device according to the present invention preferably mainly employ the below mentioned structures.

In a backlight device manufactured by simultaneously arranging a plurality of backlight blocks in a combination manner, while each of the backlight blocks is comprised of: a light emitting source; a light conducting plate for conducting light emitted from the light emitting source to the side of a liquid crystal panel; and a reflection seat arranged on a rear plane of the light conducting plate;
the above-described backlight device is arranged by that a dark/bright difference pattern for producing a dark/bright difference in luminance emitted from the backlight blocks is formed; and luminance of a bright pattern of luminance emitted from a boundary between the backlight blocks is caused not to become visually conspicuous by a luminance fluctuation of the dark/bright difference pattern emitted from the backlight blocks.

Also, in the above-described backlight device, the dark/bright difference pattern of the luminance emitted from the backlight blocks is preferably constituted by a first luminance pattern having uniform luminance which is darker than the luminance emitted from the boundary between the backlight blocks, and a second luminance pattern which is brighter than the luminance of the first luminance pattern. Further, the second luminance pattern is preferably a pattern produced from concave/convex plane having a higher coarse/dense degree than that of a circumferential plane thereof, which is located parallel to an array direction of the light emitting source. In addition, the structure for producing the second luminance pattern is preferably such a structure that an ellipticity, a circle, a rectangle, or a square is dotted parallel to the array direction of the light emitting source, which has a concave/convex plane having a higher coarse/dense degree than a coarse/dense degree of a front plane of the backlight block for producing the first luminance pattern.

Also, in the above-explained backlight device, the concave/convex plane for producing the second luminance pattern is preferably formed on a front plane of the light conducting plate on the side of the liquid crystal panel. Also, the concave/convex plane for producing the second luminance pattern is preferably formed on a rear plane of the light conducting plate on the side of the reflection seat, or formed on the reflection seat. Moreover, the concave/convex plane for producing the second luminance pattern is preferably formed by adhering a mending tape. In addition, instead of the concave/convex plane for producing the second luminance pattern, a prism portion, a convex lens, or a concave lens may be arrayed on the backlight block.

In accordance with the present invention, since the luminance fluctuation is preferably blurred over the entire area of the backlight blocks by the dark/bright difference pattern formed in the inner portions of the backlight blocks, the luminance differences between the inner portions of the backlight blocks and the boundaries of the backlight blocks can be hardly and visually recognized, so that the luminance differences between the boundaries and the inner portions of the backlight blocks cannot become visually conspicuous.

Other objects, features and advantages of the invention will become apparent from the following description of the embodiments of the invention taken in conjunction with the accompanying drawings.

### BRIEF DESCRIPTION OF THE DRAWINGS

Fig. 1 is an exploded view for schematically showing an entire structure of a liquid crystal display (LCD) having a backlight device according to an embodiment of the present invention.
Fig. 2 is a diagram for representing backlight blocks defined by dividing an entire area of the backlight device according to the present embodiment by plural number.
Fig. 3 is a sectional view for showing an internal structure of one backlight block, and a liquid crystal display containing the backlight block related to the present embodiment.
Fig. 4 is an explanatory diagram for explaining a pattern forming example by which a dark/bright luminance distribution is intentionally produced from the backlight device according to the present embodiment over a plurality of backlight blocks.
Fig. 5 is an explanatory diagram for explaining a situation over a plurality of backlight blocks, under which luminance differences between boundaries of backlight blocks and inner portions of the backlight blocks occur with respect to luminance produced from the conventional backlight device.
Fig. 6 is an explanatory diagram for showing a forming example of a pattern with respect to each individual backlight block, by which a dark/bright luminance distribution from a liquid crystal display related to the present embodiment is produced within an inner portion of one backlight block.
Fig. 7 is an explanatory diagram for showing an arrangement example of a pattern shape for intentionally producing the dark/bright luminance distribution related to the present embodiment.
Fig. 8 is an explanatory diagram for indicating another arrangement example of a pattern shape for intentionally producing the dark/bright luminance distribution related to the present embodiment.
Fig. 9 is an explanatory diagram for indicating a further arrangement example of a pattern shape for intentionally producing the dark/bright luminance distribution related to the present embodiment.
Fig. 10 is an explanatory diagram for indicating a concrete example of a pattern shape for intentionally producing the dark/bright luminance distribution related to the present embodiment.

### DETAILED DESCRIPTION OF THE INVENTION

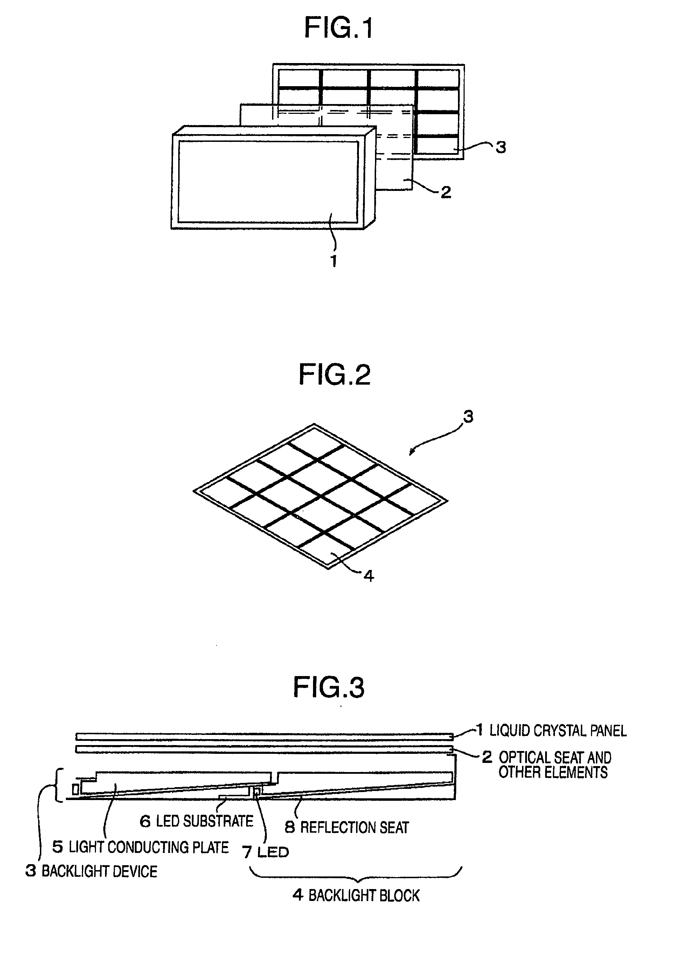

Referring now to Fig. 1 to Fig. 10, a detailed description is made of a backlight device according to an embodiment of the present invention. Firstly, an entire construction of such a case that the backlight device according to the present embodiment is applied to a picture display apparatus according to another embodiment of the present invention is schematically described with reference to Fig. 1 to Fig. 3. Fig. 1 is an exploded view for schematically showing an entire structure of a liquid crystal display (LCD) having the backlight device according to the present embodiment of the present invention. Fig. 2 is a diagram for representing backlight blocks which are obtained by dividing an entire area of the backlight device according to the present embodiment by plural number. Fig. 3 is a sectional view for showing an internal structure of one backlight block, and the liquid crystal display containing the backlight block related to the present embodiment.

In the drawings, reference numeral 1 shows a liquid crystal panel, reference numeral 2 indicates an optical seat and other elements, and reference numeral 3 represents the backlight device. Also, reference numeral 4 shows a backlight block, reference numeral 5 denotes a light conducting plate, reference numeral 6 indicates an LED substrate, reference numeral 7 represents an LED, and reference numeral 8 shows a reflection seat.

As an entire construction, a transmission type liquid crystal display (LCD: Liquid Crystal Display) using the liquid crystal panel 1, which has been popularized as a picture (video) representing-purpose display, is equipped with the liquid crystal panel 1, the optical seat 2 and other elements, and the backlight device 3. The optical seat 2 and other elements contain a diffusing plate, a diffusing seat, a polarizing plate, a polarizing film, and so on. The backlight device 3 is formed by arranging plural pieces of the above-described backlight blocks 4 on a plane in a matrix form in order to achieve uniform luminance in the large-sized backlight device 3. While the backlight device 3 is required in a liquid crystal display in order to illuminate light the liquid crystal panel 1 from the rear plane side thereof, this backlight device is classified into either a just-under type backlight device or a side light (edge light) type backlight device based upon the construction thereof.

In the backlight device 3 according to the embodiment of the present invention, the above-described side light type is employed, and such a construction that the entire area of the backlight device 3 has been sub-divided into a plurality of backlight blocks 4 is conducted. Referring now to Fig. 3, the backlight device 3 is basically equipped with the LED (Light Emitting Diode) 7 functioning as a light emitting source set on the LED substrate 6, the light conducting plate 5 for conducting effectively light entered from the LED 7 to the liquid crystal panel 1, and the reflection seat 8. The reflection seat 8 is provided on a rear plane of the light conducting plate 5 so as to reflect thereon light traveled from the rear plane of the light conducting plate 5. In the structural example shown in Fig. 3, while one backlight block 4 has been formed in a rectangular shape, light emitted from the LED 7 is traveled along a longitudinal direction (namely, from left side to right side viewed on paper plane in Fig. 3), and is reflected on a rear plane (on the side of reflection seat 8) of the backlight block 4, and then, the reflected light is traveled to the liquid crystal panel 1. A plurality of the above-described LEDs 7 have been arrayed on the side of a short edge (along vertical direction viewed on paper plane in Fig. 3) of the backlight block 4 in a proper interval. It should be noted that although the light emitting source has been explained in the form of the LED 7 in the present embodiment, the present invention is not limited only to the LED 7, but may be realized as a florescent lamp. Alternatively, the plurality of LEDs 7 may be arrayed on the side of the long edge of the backlight block 4.

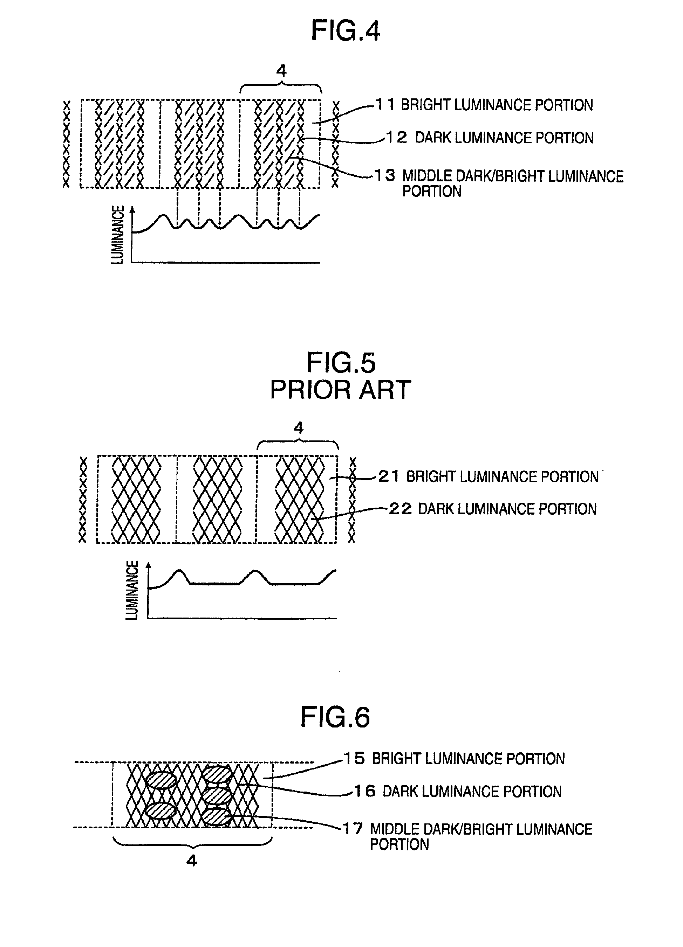

Next, referring to Fig. 4 and Fig. 5, a basic concept of the present invention is described as to a technical idea capable of relaxing a luminance difference between luminance of a boundary of a backlight block 4 and luminance of an inner portion of the backlight block 4 in the backlight device 3 according to the present embodiment of the present invention in order that brightness from the boundary does not attract attention. Fig. 4 is an explanatory diagram for explaining a pattern forming example by which a dark/bright luminance distribution is intentionally produced from the backlight device 3 according to the present embodiment over the plurality of backlight blocks 4. Fig. 5 is an explanatory diagram for explaining a situation over a plurality of backlight blocks 4, under which luminance differences between boundaries of the backlight blocks 4 and inner portions of the backlight blocks 4 occur with respect to luminance derived from a conventional backlight device. In the drawings, reference numeral 11 indicates a bright luminance portion, reference numeral 12 shows a dark luminance portion, reference numeral 13 represents a middle dark/bright luminance portion, reference numeral 21 shows a bright luminance portion, and reference numeral 22 indicates a dark luminance portion. In this example, it is so assumed that the above-described luminance difference (either dark/bright luminance difference or luminance fluctuation) corresponds to such a luminance difference when light illuminated from the backlight device 3 is ) viewed from the light projection side of the optical seat 2 and other elements containing the diffusing plate and so on. As shown in Fig. 5 which indicates the conventional technique, when the plurality of backlight blocks 4 are arrayed along lateral and longitudinal directions so as to construct the conventional backlight device, gaps are formed in boundaries of the backlight blocks 4 due to positional shifts of the arrays, and light leaks from the gaps, so that bright-lines are produced. As a result, as indicated in Fig. 5, the bright luminance portions 21 occur. Also, conversely speaking, there are some possibilities that a shortage of light may constitute dark-lines due to positional shifts in arrays of the backlight blocks 4. Fig. 5 exemplifies such a case that the light leaks, so that the bright-lines are produced.

Then, in inner portions of the backlight blocks 4, luminance has been set to become uniform. In Fig. 5, dark luminance portions 22 have been formed. It should also be understood that although Fig. 5 represents that the inner portions of the backlight blocks 4 are the dark luminance portions 22, the luminance of the dark luminance portions 22 is dark, as compared with the luminance of the bright luminance portions 21 of the boundaries. However, this implies that the inner portions of the backlight blocks 4 are not made dark. In accordance with the dark/bright luminance distribution of the conventional backlight device shown in Fig. 5, there is such a difficulty that the bright luminance portions 21 of the boundaries of the backlight blocks 4 may become visually conspicuous in comparison with the uniform dark luminance portions 22 formed in the inner portions of the backlight blocks 4.

As a consequence, the backlight device 3 according to the present embodiment of the present invention has the below-mentioned feature. That is, a dark/bright difference of luminance is intentionally formed in inner portions of backlight blocks 4 so as to influence a luminance fluctuation to an entire area of the backlight blocks 4. As a result, either line-shaped or lattice-shaped bright (otherwise, dark) luminance portions in boundaries of the backlight blocks 4 can be relaxed, namely, these bright (dark) luminance portions can be hardly and visually recognized. In the embodiment of the present invention indicated in Fig.4, the following structural example is exemplified: That is, dark luminance portions 12 and middle dark/bright luminance portion 13 are alternately arranged in the inner portions of the backlight blocks 4, while the middle dark/bright portions 13 are slightly dark, as compared with the bright luminance portions 11, and are bright, as compared with the dark luminance portions 12. In other words, a dark/bright difference of luminance is formed in the inner portions of the backlight blocks 4 so as to relax luminance differences between the bright luminance portions 11 and the dark luminance portions 12 in the boundaries of the backlight blocks 4. It should also be noted that when a dark-line appears in a boundary, in order that this dark-line does not attract attention, such a pattern may be merely formed which is darker than the uniform luminance plane 12 of the backlight block 4 and is brighter than the above-described dark-line, by which a dark/bright luminance difference is formed in the backlight block 4.

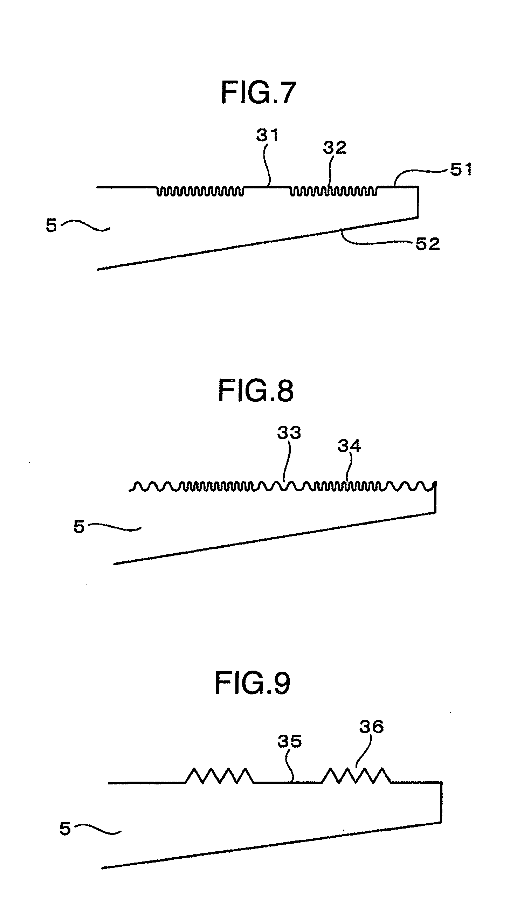

As previously explained, in the embodiment of the present invention, since the dark/bright differences of the luminance are provided in the inner portions of the backlight blocks 4, the luminance fluctuations are blurred over the entire area of the backlight device 3, which includes the boundaries thereof, the bright luminance portions 11 of the boundaries of the backlight blocks 4 can be hardly and visually recognized. A phenomenon that the bright luminance portions 11 of the boundaries do not attract attention in the above-described manner can be confirmed in an experimental manner as follows: That is, for instance, a mending tape is partially adhered onto a front plane 51 (refer to Fig. 7) of a light conducting plate 5, and the middle dark/bright luminance portions 13 is provided between the dark luminance portions 12 shown in Fig. 4 so as to confirm the above-described phenomenon. Light entered into concave/convex planes formed in high density on the front plane 51 of the mending tape is traveled along the direction (front direction) of the liquid crystal panel 1 in high probability, so that the luminance of the concave/convex planes can become higher than that of a portion to which the mending tape has not been adhered. As previously explained, the dark/bright luminance differences can be formed in the inner portions of the backlight blocks 4 by partially adhering the mending tape on the front plane 51 of the light conducting plate 5.

It should also be understood that the above-described dark/bright differences of the luminance can be formed not only by utilizing the above-explained light conducting plate 5, but also may be realized by forming patterns on the reflection seat 8, or the optical seat 2 and other elements.

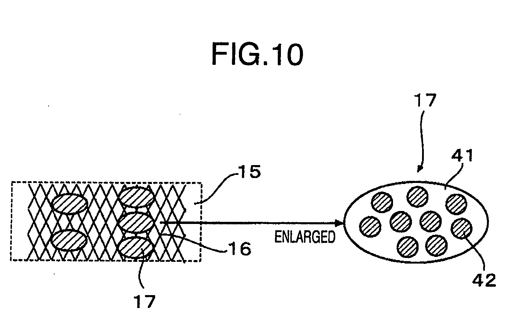

Next, referring to Fig. 6 to Fig. 10, a description is made of concrete structural examples capable of forming dark/bright luminance differences within the inner portions of the backlight blocks 4 of the backlight device 3 according to the present embodiment. Fig. 6 is an explanatory diagram for showing a forming example of a pattern by which a dark/bright luminance distribution related to the present embodiment is produced within an inner portion of a backlight block 4. Fig. 7 is an explanatory diagram for showing an arrangement example of a pattern shape for intentionally producing the dark/bright luminance distribution related to the present embodiment. Fig. 8 is an explanatory diagram for showing another arrangement example of a pattern shape for intentionally producing the dark/bright luminance distribution related to the present embodiment. Fig. 9 is an explanatory diagram for showing a further arrangement example of a pattern shape for intentionally producing the dark/bright luminance distribution related to the present embodiment. Fig. 10 is an explanatory diagram for indicating a concrete example of a pattern shape for intentionally producing the dark/bright luminance distribution related to the present embodiment.

In the drawings, reference numeral 15 shows a bright luminance portion, reference numeral 16 indicates a dark luminance portion, reference numeral 17 represents a middle dark/bright luminance portion, reference numeral 31 shows a flat portion of a front plane of a light conducting plate 5, and reference numeral 32 indicates a highly dense concave/convex plane portion of the front plane of the light conducting plate 5. Also, reference numeral 33 represents a coarse processed portion of the front plane of the light conducting plate 5, reference numeral 34 represents a highly dense concave/convex plane portion of the front plane of the light conducting plate 5, reference numeral 35 shows a flat portion of the front plane of the light conducting plate 5, reference numeral 36 indicates a prism portion of the front plane of the light conducting plate 5, reference numeral 41 shows a dark luminance portion, reference numeral 42 denotes a middle dark/bright luminance portion, reference numeral 51 indicates a front plane of a light conducting plate 5, and reference numeral 52 represents a rear plane of the light conducting plate 5.

As shown in Fig. 6, a plurality of the middle dark/bright luminance portion 17 having elliptical shapes are formed within an inner portion of one backlight block 4. In the middle dark/bright luminance portions 17, either narrow or highly dense concave/convex planes are formed on the front plane 51 (refer to Fig. 7) of the light conducting plate 5, so that a so-called "coarse plane" is formed. A plurality of the above-described "coarse planes" having the elliptical shapes are arrayed along a direction of the light conducting plate 5 (namely, short-hand direction of light conducting plate 5 in present example), which is directed parallel to the array direction of the LEDs 7, so as to construct one middle dark/bright luminance portion region. Two, or more pieces of the middle dark/bright luminance regions are provided along a direction (namely, long-hand direction of light conducting plate 5 in present example) which is intersected perpendicular to the array direction of the LEDs 7. As a result, these coarse planes play a function capable of making an amount of light traveled along the front direction larger than an amount of light traveled from a circumferential plane thereof, so that the coarse planes may produce bright luminance. When the entire area of the backlight device 3 which contains the boundaries of the backlight blocks 4 is viewed, since the middle dark/bright luminance portions 17 are present, either a fluctuation or irregularity may occur in a dark/bright luminance distribution produced from this backlight device 3 to the front direction, so that a dark/bright degree of luminance can be hardly and visually recognized (namely, brightness of boundaries do not attract attention). As shown in Fig. 6, the shape of the middle dark/bright luminance portion 17 is not limited only to the above-described elliptical shape, but may be selected from a circular shape, or a rectangular shape. Further, total numbers of adjoining middle dark/bright luminance portions 17 (namely, total quantities of adjoining middle dark/bright luminance portions 17 along longitudinal direction as viewed on paper plane of Fig. 6) may be alternatively selected from 2 and 3, namely, may be made different from each other. In summary, the middle dark/bright luminance portions 17 may be formed in such a manner that irregularity of luminance differences may occur between the dark luminance portions 15 and the own middle dark/bright luminance portions 17.

Fig. 7 to Fig. 9 represent concrete examples for forming the middle dark/bright luminance portions 17 in the backlight block 4. In accordance with the concrete example of Fig. 7, while the front plane 51 (located on the side of liquid crystal panel 1) of the light conducting plate 5 corresponding to the backlight block 4 constitutes a substantially flat plane 31, a partially highly-dense concave/convex plane 32 is formed on this substantially flat plane 31. The concave/convex plane 32 is formed by piercing concaves from the front plane 51 of the flat plane. An amount of forward-traveling light to the side of the liquid crystal panel 1 becomes large by forming the concave/convex plane 32, so that this concave/convex plane 32 may produce luminance which is brighter than that of the circumferential plane thereof.

Also, in accordance with the concrete example of Fig. 8, another concave/convex plane 33 is formed on the front plane 51 of the light conducting plate 5 so as to increase an amount of forward-traveling light to the liquid crystal panel 1. Moreover, a further concave/convex plane 34 having higher density than that of the first-mentioned concave/convex plane 33 is formed in order that luminance produced by this concave/convex plane 33 is made brighter than that of the circumferential plane, so that a dark/bright luminance difference is formed in the inner portion of the backlight block 4. For instance, as the boundaries of the backlight block 4, while right/left edge portions of a paper plane viewed in Fig. 8 are exemplified, the middle dark/bright luminance portions 13 have been formed at two positions along a right/left direction of the paper plane in order to relax a dark/bright luminance difference caused by that the bright luminance portions 11 (refer to Fig. 4) are produced at the right/left edge portions. Alternatively, as apparent from Fig. 2, the boundaries of the backlight block 4 are not limited only to the boundaries located along the right/left direction, but also are the boundaries located along the upper/lower direction. Accordingly, there are some possibilities that the bright luminance portions 11 may be formed even in the boundaries along the upper/lower direction due to positional shifts. In such a case, the inventive idea represented in Fig. 4 may be applied, and therefore, the middle dark/bright luminance portions 13 may be formed in such a manner that luminance caused by the above-described boundaries does not attract attention.

Also, in accordance with the concrete example of Fig. 9, while a prism portion 36 is partially formed on a flat front plane 35 of the light conducting plate 5, an amount of forward-traveling light to the side of the liquid crystal panel 1 is increased by this prism portion 36 so as to become the luminance produced by the prism portion 36 brighter than that of the circumferential portion thereof, and thus, the middle dark/bright luminance portions 13 (refer to Fig. 4) are formed. Alternatively, a convex lens may be provided, or a concave lens may be embedded in the flat front plane 35 of the light conducting plate 5 instead of the prism portion 36 formed on the flat front plane 35 of the light conducting plate 5, by which a similar effect to that achieved by the prism portion 36 may be achieved. In the structural examples shown in Fig. 7 to Fig. 9, as represented in these drawings, two, or more sets of the concave/convex planes (coarse planes) 32 and 34, the prism planes 36, the convex lenses, or the concave lenses are provided along a direction (namely, long-hand direction of light conducting plate 5 in present example) which is intersected perpendicular to the array direction of the LEDs 7 in a similar manner to that of Fig. 6.

In the above-described structural examples represented in Fig. 7 to Fig. 9, the highly dense concave/convex planes (coarse planes) 32 and 34, or the prism planes 36 have been processed, or provided on the front plane 51 of the light conducting plate 5 along the direction parallel to the array direction of the LEDs 7. These concave/convex planes (coarse planes) 32 and 34, or the prism planes 36, otherwise, the concave lenses and the convex lenses may not be limited only to be formed on the front plane 51 of the light conducting plate 5, but also, may be alternatively formed on the rear plane 52 thereof, or may be alternatively formed on both the front plane 51 and the rear plane 52. Furthermore, the patterns for forming the dark/bright luminance distributions by processing the concave/convex planes 32 and 34 may be alternatively formed on the diffusing seat which has been previously arranged above the light conducting plate 5. Also, since transmittance of a diffusing seat, or the like may be locally changed, a pattern for forming a dark/bright luminance distribution may be alternatively formed. Fig. 10 indicates a concrete example as to such a pattern shape for intentionally producing the dark/bright luminance distribution related to the present embodiment mode, namely, corresponds to a modification of the concrete example shown in Fig. 6. In accordance with this modification, instead of the above-described structure that the middle dark/bright luminance portions 17 having the elliptical shapes (refer to Fig. 6) form the highly dense concave/convex plane, as an internal structure of this elliptical shape, the middle dark/bright luminance portion 17 is constituted by a dark luminance portion 41 similar to a circumferential portion thereof, and a large number of middle dark/bright luminance portions 42 having either circular shapes or elliptical shapes. Since such a structure of the modification is formed, dark/bright luminance differences produced in the inner portion of the backlight block 4 may have irregularity, so that the bright luminance portions 11 (refer to Fig. 4) of the boundaries do not attract attention. In other words, such an effect that brightness of the luminance produced in the boundaries of the backlight block 4 becomes visually conspicuous may be reduced.

In the above-described embodiments, elements (will be referred to as "bright portion adding elements" hereinafter) for adding bright portions to the front plane 51 of the light conducting plate 5 have been formed in such a manner that these bright portion adding elements are elongated along the direction (namely, short-hand direction of light conducting plate 5 in present embodiment) parallel to the array direction of the LEDs 7 on the front plane 51 of the light conducting plate 51, while these bright portion adding elements correspond to the above-explained coarse planes, concave/convex planes, prism planes, concave lenses, convex lenses, or the like. Also, two, or more pieces of these bright portion adding elements have been arrayed along the direction (namely, short-hand direction of light conducting plate 5 in present embodiment, and traveling direction of light emitted from LEDs 7 within light conducting plate 5) which is intersected perpendicular to the array direction of the LEDs 7. With employment of the above-described structures, the luminance differences (luminance fluctuations) having the shorter period than the period of the bright luminance portions (otherwise dark luminance portions) in the boundary portions of the backlight blocks 4 can be formed on the front plane 51 of the light conducting plate 5. As a result, the bright luminance portions (otherwise, dark luminance portions) in the boundary portions of the backlight blocks 4 can be hardly and visually recognized.

It is preferable that an interval between maximal points of respective luminance in two or more pieces of the above-described bright portion adding elements is nearly equal to 1 to 3 cm. Moreover, it is preferable that the above-described interval between the maximal points is two or more times longer than the distance defined from the front plane 51 of the light conducting plate 5 to a light incident plane of the optical seat 2 and other elements. The above-described light incident plane implies a light incident plane of the diffusing plate arranged at the nearest position with respect to the light conducting plate 5. Also, it is more preferable that a luminance difference between light passed through the bright portion adding elements and light emitted from a portion of the front plane 51 of the light conducting plate 5 except for the bright portion adding elements is larger than, or equal to 50 % of a luminance difference between light emitted from a bright luminance portion (otherwise, dark luminance portion) in the boundary portion of the backlight block 4 and the light emitted from the front plane 51 of the light conducting plate 5 except for the bright portion adding elements. If the bright portion adding elements are formed in such a manner that all the above-described conditions can be satisfied, then the bright luminance portions (otherwise, dark luminance portions) in the boundary portions of the backlight blocks 4 cannot furthermore attract attention.

Also, if the above-described elements capable of diffusing the light are provided along the direction intersected perpendicular to the array direction of the LEDs 7 on the front plane 51 of the light conducting plate 5, then the bright luminance portions (otherwise, dark luminance portions) in the boundary portions of the backlight blocks 4, which are produced along the direction (namely, right/left direction viewed on paper plane of Fig. 2) intersected perpendicular to the array direction of the LEDs 7 can be hardly and visually recognized. Apparently, the above-described elements capable of diffusing the light may be alternatively provided along both the direction parallel to the array direction of the LEDs 7, and the direction intersected perpendicular to the array direction.

In accordance with the structures of the above-described embodiments, it is possible to construct that either the bright luminance portions or the dark luminance portions between the boundaries of the backlight blocks 4 do not attract attention. Alternatively, it is possible to construct that either bright luminance portions or dark luminance portions, which are produced within the inner portion of the backlight blocks 4 other than the above-described boundaries, may not similarly attract attention.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A backlight device (3) manufactured by simultaneously arranging a plurality of backlight blocks (4) in a combination manner, while each of the backlight blocks (4) is comprised of: a light emitting source containing an LED (Light Emitting Diode) (7), or a fluorescent lamp; a light conducting plate (5) for conducting light emitted from the light emitting source to the side of a liquid crystal panel (1); and a reflection seat (8) arranged on a rear plane of the light conducting plate (5); wherein:
a dark/bright difference pattern for producing a dark/bright difference in luminance emitted from the backlight blocks (4) is formed.

2. A backlight device (3) as claimed in claim 1 wherein:
the dark/bright difference pattern of the luminance emitted from the backlight blocks (4) is constituted by a first luminance pattern (12, 16) having darker luminance than the luminance emitted from the boundary between the backlight blocks (4), and a second luminance pattern (13, 17) which is brighter than the luminance of the first luminance pattern (12, 16).

3. A backlight device (3) as claimed in claim 2 wherein:
the second luminance pattern (13, 17) is a pattern produced from a concave/convex plane (32, 34) having a higher coarse/dense degree than that of a circumferential plane thereof, which is located parallel to an array direction of the light emitting source.

4. A backlight device (3) as claimed in claim 2 wherein:
the structure for producing the second luminance pattern (13, 17) is such a structure that an ellipticity, a circle, a rectangle, or a square is dotted parallel to the array direction of the light emitting source, which has a concave/convex plane (42) having a higher coarse/dense degree than a coarse/dense degree of a front plane of the backlight block (4) for producing the first luminance pattern (12, 16).

5. A backlight device (3) as claimed in claim 3 wherein:
the concave/convex plane (32, 34) for producing the second luminance pattern (13, 17) is formed on a front plane (51) of the light conducting plate (5) on the side of the liquid crystal panel (1).

6. A backlight device (3) as claimed in claim 3 wherein:
the concave/convex plane (32, 34) for producing the second luminance pattern (13, 17) is formed on a rear plane (52) of the light conducting plate (5) on the side of the reflection seat (8), or formed on the reflection seat (8).

7. A backlight device (3) as claimed in claim 3 wherein:
the concave/convex plane (32, 34) for producing the second luminance pattern (13, 17) is formed by adhering a mending tape.

8. A backlight device (3) as claimed in claim 2 wherein:
for forming the second luminance pattern (13, 17), a prism portion (36), a convex lens, or a concave lens is arranged on the surface or the back of the backlight block (4).

9. A backlight device (3) manufactured by simultaneously arranging a plurality of backlight blocks (4) in a combination manner, while each of the backlight blocks (4) is comprised of: a light emitting source containing an LED (Light Emitting Diode) (7), or a fluorescent lamp; a light conducting plate (5) for conducting light emitted from the light emitting source to the side of a liquid crystal panel (1); and a reflection seat (8) arranged on a rear plane of the light conducting plate (5); wherein:
as to luminance emitted from the backlight blocks (4), a dark/bright luminance distribution is formed, the luminance of which is not uniformed; and
luminance of a dark pattern (12, 16) of luminance emitted from a boundary between the backlight blocks (4) is caused not to become visually conspicuous by a luminance fluctuation produced by the dark/bright luminance distribution.

10. A video display apparatus constructed by comprising:
the backlight device (3) recited in claim 1; a diffusing plate; a diffusing seat; an optical seat (2) having a polarizing film; and a liquid crystal panel (1).

11. A video display apparatus as claimed in claim 10 wherein the concave/convex plane (32, 34) is arranged on the optical seat (2).

12. A video display apparatus comprising a backlight device (3) manufactured by simultaneously arranging a plurality of backlight blocks (4) in a combination manner, while each of the backlight blocks (4) is comprised of: a light emitting source; a light conducting plate (5) for conducting light emitted from the light emitting source to the side of a liquid crystal panel (1); and a reflection seat (8) arranged on a rear plane of the light conducting plate (5); wherein:
a plurality of elements for diffusing light are formed on each of the light conducting plates (5) in said respective backlight blocks (4) along a direction substantially parallel to a boundary between the backlight blocks (4).

13. A video display apparatus as claimed in claim 12, wherein the picture display device recited in claim 12, the element for diffusing the light is formed on either the front plane (51) or the rear plane (52) of the light conducting plate (5).

14. A video display apparatus as claimed in claim 12, or claim 13, wherein the picture display apparatus recited in claim the element for diffusing the light is a coarse plane, a concave/convex plane, a prism plane (36), a concave lens, or a convex lens.
